# EUROPEAN PATENT SPECIFICATION

(11) **EP 2 831 015 B1**
(45) Date of publication and mention of the grant of the patent: **25.08.2021**
(21) Application number: 13716857.1
(22) Date of filing: 29.03.2013
(51) Int. Cl.: C04B 28/02

(54) **BINDER COMPOSITION COMPRISING LIGNITE FLY ASH**
BINDEMITTELZUSAMMENSETZUNG MIT BRAUNKOHLEFLUGASCHE
COMPOSITION DE LIANT COMPRENANT DE LA CENDRE VOLANTE DE LIGNITE

(30) Priority: 30.03.2012 NL 2008575
(43) Date of publication of application: 04.02.2015
(73) Proprietor: Van Nieuwpoort Beheer B.V., 2800 AC Gouda (NL)
(72) Inventor: VAN MECHELEN, Dirk Maria Alfons Jules, 2830 Tisselt (BE); VERMEULEN, Edwin Menno Michaël, 2408 HL Alphen Aan De Rijn (NL)
(74) Representative: EP&C
(86) International application number: PCT/NL2013/050237
(87) International publication number: WO 2013/147608

(56) References cited:
- DE-A1- 4 039 014
- DE-A1- 19 503 142
- FR-A1- 2 543 942
- US-A- 4 715 896
- None

## Description

### Technical Field

The present invention relates to binder compositions comprising lignite fly ash. The invention further relates to a concrete, mortar or grout obtainable by allowing a mixture of said binder composition, aggregate material and water to set.

### Background Art

The most commonly used type of cement is portland cement, which is typically prepared by calcining limestone, i.e. calcium carbonate, in the presence of small quantities of other materials.

Although concrete made with portland cement is renowned for its advantageous properties such as fast hardening and high ultimate compressive strength, there is a growing concern on the environmental aspects of manufacturing large amounts of portland cement. In addition, efforts have been made to replace portland cement with cheaper alternatives.

It is known to replace part of the portland cement present in a binder composition with fly ash. Fly ashes can be divided into anthracite, bituminous, subbituminous and lignite fly ash, the names referring to the type of coal they originate from. Although the chemical composition of the different types of fly ash varies considerably, all fly ashes have in common that they comprise certain amounts of silicon dioxide, aluminum oxide, iron oxide and calcium oxide. Generally, a lignite fly ash has the highest calcium oxide content and the lowest combined amount of silicon, iron and aluminum oxides. Fly ashes can also be classified as class F fly ash or class C fly ash, the compositional differences between both residing in the calcium oxide content, the sulphate content and the combined amounts of silicon, iron and aluminum oxide. According to ASTM C618, a fly ash is considered a class F fly ash when the sum of silicon, iron and aluminum oxides is 70 wt.% or higher and the sulphate content does not exceed 5 wt.%. In a class C fly ash the sum of silicon, iron and aluminum oxides is 50 wt.% or higher and the sulphate content does not exceed 5 wt.%. Although not a requirement under ASTM C618, class F fly ashes typically have a calcium oxide content lower than 20 wt.%, whereas the calcium oxide content of a class C fly ash typically exceeds 20 wt.%.

US4715896 is related to a binder composition for consolidated fills that are well-adapted for use in non-structural applications such as back fills in mine excavations and sludge stabilization. The binder composition comprises about 55 to 97 wt.% of finely divided water-hardenable vitrified cementitious iron blast furnace slag; about 3 to 45 wt.% of class C fly ash; and about 2 to 15 wt.% of calcium hydroxide. In this document, a distinction is made between class C and class F fly ash. The class C fly ash originates from the Rocky Mountains regions of North America, whereas the class F fly ash originates from the Appalachian regions. It turns out to be essential that a class C fly ash is used, since a class F fly ash exhibits no significant strength after 28 days, not even when used in combination with calcium hydroxide. This leads the skilled person to the conclusion that, according to US4715896, no fly ashes other than class C fly ash are suitable fur use in cement setting reactions.

In addition, US4715896 teaches that the combination of cementitious iron blast furnace slag and class C fly ash only leads to consolidated fills with a sufficient compressive strength of about 10 to 15 MPa when an activator such as calcium hydroxide is used. Without said activator, the combination of a class C fly ash and cementitious iron blast furnace slag leads to results with poor compressive strength. In this respect, US4715896 observes that the presence of class C fly ash interferes with the development of compressive strength of the iron blast furnace slag. For this reason, the amount of class C fly ash present in the cementitious binder is limited to no more than 45 wt.%.

The above cementitious iron blast furnace slag, more commonly referred to as ground granulated blast furnace slag (GGBS), is as such a known replacement for portland cement in binder compositions. It is derived from molten iron slag, which is a by-product of iron and steel production. GGBS is obtained by quenching the molten slag in water or steam, thus producing a glassy, granular product that is then dried and ground into a fine powder. By quenching the molten slag in water the cementitious properties are optimized. This definition is in accordance with European Standard EN 15167-1, indicating that granulated blast furnace slag is vitrified material made by rapid cooling of a slag melt obtained by smelting iron ore. EN 15167-1 further defines ground granulated blast furnace slag as a fine powder made by grinding granulated blast furnace slag, the fineness thereof being indicated by a specific surface (determined according to EN-196-6) of at least 275 m²/kg. The grinding step is needed to assess the cementitious properties of GGBS. Only when ground will a mixture of e.g. aggregate material, GGBS and water acquire any significant compressive strength. Concrete, mortar or grout made with a binder composition comprising significant amounts of GGBS, so-called slag cement, apart from being an environmentally friendly and cost-effective alternative for conventional portland cement, has the advantage of being less prone to sulphate attack than said portland cement.

FR2543942 describes a binder material that comprises lignite fly ash and ground gypsum for the preparation of concrete. It was found that lignite fly ash as sole binder material resulted in inferior mechanical resistance. In an example two binder compositions comprising lignite fly ash and gypsum in a 30/70, and 50/50 ratio, respectively, were tested in a concrete composition comprising 53% fine sand, 35 % limestone and 12% granulated blast furnace slag. It is evident that this document does not describe ground granulated blast furnace slag.

### Description of the Invention

The present invention is related to a binder composition for concrete, mortar or grout comprising lignite fly ash and a second ingredient selected from the group consisting of ground granulated blast furnace slag (GGBS), an alkaline earth activator, a class F fly ash, a class C fly ash, calcium carbonate, magnesium carbonate and mixtures thereof, wherein the lignite fly ash has a sulphate content of at least 6 wt.%, based on the weight of the lignite fly ash, and wherein the binder composition comprises from 10 to 90 wt.% of the lignite fly ash and from 90 to 10 wt.% of the second ingredient, based on the total weight of the binder composition.

This lignite fly ash is neither a class C fly ash, nor a class F fly ash. Surprisingly, the inventors found that when a lignite fly ash having a sulphate content of 6 wt.% or higher is combined with one or more of said second ingredients, a binder composition is formed that will lead to a concrete, mortar or grout that has considerable compressive strength. Such a concrete, mortar or grout advantageously has a compressive strength of about 10 MPa or higher and is very suitably used in non-structural applications.

It is believed that the increased amount of sulphate in the present lignite fly ash, when said fly ash is combined with a second ingredient such as GGBS, causes a setting concrete, mortar or grout mixture to acquire significant compressive strength. When a class C fly ash is employed, i.e. when the sulphate content is too low, no significant strength build-up takes place, as is shown by examples 10 and 13 in US4715896.

In addition, when the present binder composition comprises lignite fly ash and a certain amount of an alkaline earth activator, with or without any of the other second ingredients, a concrete, mortar or grout can be obtained that has a 28-day compressive strength that is significantly higher than the compressive strength obtained with a binder composition comprising a class C fly ash instead of the lignite fly ash according to the invention. When combined with an alkaline earth activator, the present lignite fly ash leads to a concrete, mortar or grout that has such a high 28-day compressive strength that it can be used in structural applications.

When the lignite fly ash according to the invention is combined with GGBS, a class F fly ash, a class C fly ash, calcium carbonate, magnesium carbonate, or mixtures thereof as the second ingredient, its main function is to activate these second ingredients, i.e. the cementitious properties of the second ingredients are unlocked by the reaction with the lignite fly ash. On the other hand, when the lignite fly ash according to the invention is combined with an alkaline earth activator as the second ingredient, the latter functions as an agent that activates the pozzolan fraction of the lignite fly ash. A pozzolan is a material which, when combined with an activator such as calcium hydroxide, exhibits cementitious properties. This illustrates the diverse character of the present lignite fly ash.

The second ingredient is selected from the group consisting of GGBS, class F fly ash, class C fly ash, calcium carbonate, magnesium carbonate, or mixtures thereof, and the binder composition according to the invention comprises of from 10 to 90 wt.% of the lignite fly ash and of from 90 to 10 wt.% of the second ingredient, based on the total weight of the binder composition. Preferably, the composition comprises of from 30 to 70, more preferably 40 to 60 wt.% of the lignite fly ash and of from 70 to 30, more preferably 60 to 40 wt.% of the second ingredient, based on the total weight of the binder composition. More preferably, the second ingredient is GGBS or a combination of GGBS and one or more of the other second ingredients.

When the binder composition according to the invention comprises lignite fly ash and an alkaline earth activator as the second ingredient, with or without another second ingredient, said alkaline earth activator is preferably present in an amount of from 0.5 to 20 wt.%, more preferably 1 to 10 wt.%, most preferably 2 to 6 wt.%, based on the total weight of the binder composition.

Advantageously, the binder composition comprises lignite fly ash and a combination of GGBS and the alkaline earth activator as the second ingredient. Such a binder composition has the advantage that it leads to a concrete, mortar or grout that has a compressive strength that is sufficient for structural applications such as structural walls of homes or office buildings.

The lignite fly ash according to the invention can be incorporated in the binder composition as such, or it can be milled or ground before addition. Milling or grinding has the advantage of increasing the specific surface or Blaine of the fly ash and hence enhancing the cementitious reactions, leading to a higher compressive strength. Preferably, the lignite fly has a Blaine of 400 m²/kg or more. The specific surface or Blaine can be determined using any suitable technique known in the art, e.g. air permeability tests using a Blaine permeameter.

Advantageously, the lignite fly ash is slaked before addition to the binder composition. Slaking is the process of treating the fly ash with water in order to convert the calcium or magnesium oxides present in the lignite fly ash to their corresponding hydroxides.

The other ingredients of the binder composition are preferably added in powder form to the composition, or the ingredients are added as rough materials to said composition, after which the binder composition is ground as a whole.

As stated above, all fly ashes, including the lignite fly ash according to the invention, have in common that they comprise certain amounts of silicon dioxide, aluminum oxide, iron oxide and calcium oxide. To determine the chemical composition of the lignite fly ash and the second ingredients any technique commonly used in the art may be employed. Suitable examples of such techniques include x-ray fluorescence (XRF) and x-ray diffraction (XRD).

Preferably, the silicon dioxide content of the lignite fly ash does not exceed 35 wt.%. Further, the combined amount of the oxides of silicon, aluminum and iron preferably does not exceed 50 wt.%. The calcium oxide content of the lignite fly ash is preferably 20 wt.% or higher, more preferably of from 30 to 50 wt.%.

As to the sulphate content of the lignite fly ash, although a sulphate content of 6 wt.% or higher leads to good results, even better results are obtained when the sulphate content lies between 7.5 and 15 wt.%. The sulphate content of lignite fly ash can be measured using any analytical technique or method commonly used in the art, e.g. XRF. It is reported as the sulphur trioxide (SO₃) content, in percentage by weight, based on the total weight of the lignite fly ash composition.

The composition of GGBS used in a binder composition according to the present invention is in accordance with European Standard EN 197-1. It consists, for at least 67 % of its mass, of the combined amounts of calcium oxide (CaO), magnesium oxide (MgO) and silicon dioxide (SiO₂). The remaining mass comprises aluminum oxide and small quantities of other compounds. The mass proportion (CaO + MgO)/(SiO₂) must be larger than 1. In respect of the present invention, the composition of the GGBS may vary, as long as it fulfills the above composition requirements.

The binder composition according to the invention may comprise an alkaline earth activator as the second ingredient. Said alkaline earth activator comprises one or more alkaline earth oxides or hydroxides. Although the oxides and hydroxides of calcium and magnesium are preferred, the oxides and hydroxides of strontium and barium may be employed as well. The alkaline earth activator may also comprise alkaline earth oxide- or hydroxide-containing minerals. A very suitable mineral is lime, which in the context of the present invention denotes the oxides and hydroxides of calcium and magnesium. Preferably, the alkaline earth activator is selected from the group consisting of calcium oxide, calcium hydroxide and a mixture thereof.

The second ingredient according to the invention can be calcium or magnesium carbonate, or a mixture of both. Said carbonates can be added to the binder composition in their chemically pure form, but also as a powder or granulate derived from naturally occurring rocks and minerals such as limestone, dolomite or ankerite.

Advantageously, the lignite fly ash comprises a certain amount of free lime, in this context also known as free calcium oxide. In the present context, the expression "free lime" denotes the amount of calcium oxide present in the unslaked lignite fly ash that is available for hydration upon being contacted with water. In this respect it is noted that the remaining fraction of calcium oxide that is not considered "free" is present in the lignite fly ash in the form of calcium aluminates, silicates and aluminosilicates, or it is part of a glassy, amorphous phase, or both. Free lime increases the ultimate compressive strength and boosts the initial setting speed of a setting concrete, mortar or grout mixture. Preferably, the lignite fly ash has a free lime content of at least 2.5 wt.%. More preferably, the free lime content lies between 4 and 10 wt.%.

Although not required, it is beneficial to include certain amounts of portland cement in the binder composition, since this enhances the ultimate compressive strength and the setting speed of a setting concrete, mortar or grout mixture. The present inventors found that concrete, mortar or grout prepared with a binder composition according to the invention comprising lignite fly ash, GGBS and/or an alkaline activator, and additionally portland cement has a significantly higher 28-day compressive strength than concrete, mortar or grout that is prepared with the same binder composition comprising a class C fly ash instead of the lignite fly ash according to the invention. When the binder composition comprises portland cement, the latter is preferably present in an amount of from 5 to 30, more preferably of from 10 to 20 wt.%, based on the total weight of the binder composition.

The binder composition according to the invention may further comprise one or more additives selected from the group consisting of dyes, plasticizers, stabilizers, waterproofing agents, frost proofing agents, dust proofing agents, air entrainment agents, set accelerating agents and preservatives.

According to another aspect of the present invention, a method for manufacturing concrete, mortar or grout is provided, comprising allowing a mixture of a suitable aggregate material, a binder composition according to the invention and water to set. The binder composition should be in particulate or granulate form when employed in the method.

Advantageously, said method comprises the steps of:
(a) bringing together, e.g. in a cement mixer, an aggregate material, a binder composition according to the invention and water, thereby forming a wet concrete, mortar or grout mixture;
(b) applying said mixture to a substrate; and
(c) allowing said mixture to cure.

More specifically, said method comprises the steps of:
(a) bringing together, e.g. in a cement mixer, an aggregate material, a binder composition according to the invention and water, thereby forming a wet concrete, mortar or grout mixture;
(b1) pouring said mixture in the case of concrete or grout; or
(b2) applying said mixture on a block or brick in the case of mortar; and
(c) allowing said mixture to cure.

The nature of the aggregate material is not particularly limited. In fact, every aggregate material commonly used in the art is suitable. Examples of suitable aggregate materials include sand, natural gravel, shingle, grit and crushed rock. Also recycled materials (from construction, demolition and excavation waste) can be used as an at least partial replacement for conventional aggregate materials. It is noted that in the present context the term "aggragate material" also includes mixtures of aggregate materials, such as a combination of sand and gravel.

Preferably, the lignite fly ash is ground and/or slaked prior to its addition to the mixture.

It is noted that the binder composition according to the invention does not need to be processed in a specific way. It can be processed just as any commonly employed cement such as ordinary portland cement.

Yet another aspect of the invention is related to a concrete-aggregate composition comprising a suitable aggregate material and a binder composition according to the invention, both as specified above. This composition is suitably mixed with water to form a concrete, mortar or grout. Preferably, the aggregate material and lignite fly ash are present in the concrete-aggregate composition in a weight ratio of between 2:1 and 10:1. Advantageously, the concrete-aggregate composition is used to in the manufacture of a concrete floor. To this end, a mixture of the concrete-aggregate composition and water is allowed to set.

Another aspect of the present invention is related to concrete, mortar or grout obtainable by the method outlined above.

Yet another aspect is related to the use of a binder composition according to the present invention in the manufacture of a concrete floor.

In a preferred embodiment, the binder composition is used in the manufacture of a concrete floor or a road base, which in this context is a concrete layer that is used as a structural base of a road. When used as floor, the concrete layer can be the surface layer or it can be covered with one or more top layers comprising e.g. a wear resistant resin. When used as a road base, the concrete layer may be covered with one or more asphalt concrete layers.

To manufacture the floor a suitable aggregate material, a binder composition according to the invention and water in a weight ratio of from about 4:2:1 to 15:5:1 are mixed to form a concrete mixture. This mixture is then poured over the floor or road surface and allowed to set.

The invention is now illustrated by means of the following examples.

### Examples

Two different lignite fly ashes A and B according to the invention were used in a binder composition in the preparation of concrete. The binder composition further comprised GGBS. The chemical compositions of fly ashes A and B are listed in table 1, as well as the composition of a class C fly ash that was used as a comparison. The chemical compositions were determined using XRF. In addition, the free lime content was determined using XRD.

### Example 1

In one experiment ("1a) and in accordance with NEN standard EN 196-1, 1350 grams of sand (grain size up to 4 mm), 450 grams of a binder composition comprising lignite fly ash A and GGBS in a 1:1 weight ratio and 225 grams of water were mixed in a mould and allowed to set. In a second experiment ("1b") the same components were used in the same amounts, with the exception of the amount of water which was reduced to 202.5 grams. The lignite fly ash was not ground or slaked prior to addition to the binder composition. In table 2 the compressive strengths of the set concrete after a certain number of days are listed.

| **table 1** | | | |
|---|---|---|---|
| ingredients (wt.%) | lignite fly ash A | lignite fly ash B | class C fly ash |
| SiO₂ | 24 | 21 | 65 |
| Fe₂O₃ | 10 | 9 | 10 |
| CaO¹ | 41 | 42 | 11 |
| MgO | 4 | 8 | 3 |
| Al₂O₃ | 11 | 5 | 9 |
| SiO₂ + Fe₂Oₛ + Al₂O₃ | 45 | 35 | 84 |
| Na₂O | 0 | 5 | 0 |
| K₂O | 0 | 1 | 1 |
| SO₃ | 10 | 9 | 1 |
| | | | |
| Free lime¹ | 8 | 12 | 0 |
| | | | |
| ¹The CaO content includes the free lime content | | | |

| | **table 2** | | | | |
|---|---|---|---|---|---|
| example | | 1a | 1b | 2 | 3 |
| | | | | | |
| lignite fly ash A (wt. %) | | 50 | 50 | 50 | 50 |
| ground | | no | no | no | yes |
| slaked | | no | no | yes | yes |
| GGBS (wt.%) | | 50 | 50 | 50 | 50 |
| | | | | | |

| compressive strength (MPa); after: | | | | | |
|---|---|---|---|---|---|
| 28 days | | 16.8 | 25.1 | 9.7 | 19.6 |
| 91 days | | 21.5 | 33.5 | 13.8 | 32.0 |
| 650 days | | 28.0 | - | 20.5 | 44.9 |

### Example 2

The procedure set out in example 1 was repeated with the difference that lignite fly ash A was slaked prior to addition to the binder composition. In table 2 the compressive strengths of the set concrete after 28, 91 and 650 days are listed.

### Example 3

The procedure set out in example 1 was repeated with the difference that lignite fly ash A was ground and slaked prior to addition to the binder composition. In table 2 the compressive strengths of the set concrete after 28, 91 and 650 days are listed.

The results in table 2 show that a mixture of lignite fly ash and GGBS according to the invention leads to a high compressive strength after 28 days or more.

### Example 4

A binder composition comprising lignite fly ash A, GGBS and portland cement (CEM I 52.5 R), was mixed with sand and water utilizing the same amounts as set out above in example 1. The obtained mixture was allowed to set. The relative amounts of the components present in the binder composition as well as the 28-day compressive strength are listed in table 3.

### Example 5

The procedure set out in example 4 was repeated with the difference that lignite fly ash B was used instead of lignite fly ash A.

### Example 6

As a comparison, the procedure set out in example 4 was repeated with the class C fly ash of table 1 instead of the lignite fly ash A.

### Example 7

A binder composition comprising lignite fly ash A and portland cement (CEM I 52.5 R) in a 1:1 weight ratio was mixed with sand and water utilizing the same amounts as set out above in example 1. The obtained mixture was allowed to set. The 28-day compressive strength is listed in table 3.

### Example 8

The procedure set out in example 7 was repeated with the difference that lignite fly ash B was used instead of lignite fly ash A.

### Example 9

As a comparison, the procedure set out in example 7 was repeated with the class C fly ash of table 1 instead of the lignite fly ash A.

In none of the examples 4-9 the lignite fly ash was ground or slaked prior to addition to the binder composition.

| table 3 | | | | | | |
|---|---|---|---|---|---|---|
| example | 4 | 5 | 6 | 7 | 8 | 9 |
| | | | | | | |
| fly ash (wt.%) | 35 | 35 | 35 | 50 | 50 | 50 |

| type | A | B | class C | A | B | class C |
|---|---|---|---|---|---|---|
| GGBS (wt.%) | 45 | 45 | 45 | - | - | - |
| CEM I 52,5 R (wt.%) | 20 | 20 | 20 | 50 | 50 | 50 |
| | | | | | | |
| 28-day compressive strength (MPa) | 45.3 | 46.2 | 20.3 | 38.8 | 43.3 | 32.9 |

The results in table 3 show that a binder composition comprising a lignite fly ash according to the invention leads to a significantly higher compressive strength after 28 days than a binder composition comprising a class C fly ash.

## Claims

1. Binder composition for concrete, mortar or grout comprising lignite fly ash and a second ingredient selected from the group consisting of ground granulated blast furnace slag (GGBS), an alkaline earth activator selected from calcium oxide, calcium hydroxide, magnesium oxide, magnesium hydroxide and mixtures thereof, a class F fly ash, a class C fly ash, calcium carbonate, magnesium carbonate and mixtures thereof, wherein the lignite fly ash has a sulphate content of at least 6 wt.%, based on the weight of the lignite fly ash, and wherein the binder composition comprises from 10 to 90 wt.% of the lignite fly ash and from 90 to 10 wt.% of the second ingredient, based on the total weight of the binder composition.

2. Binder composition according to claim 1, wherein the second ingredient is GGBS and wherein the composition comprises of from 10 to 90 wt.% of the lignite fly ash and of from 90 to 10 wt.% of the GGBS, based on the total weight of the binder composition.

3. Binder composition according to claim 2, wherein the composition comprises of from 30 to 70 wt.%, preferably 40 to 60 wt.% of the lignite fly ash and of from 70 to 30 wt.%, preferably 60 to 40 wt.% of the GGBS, based on the total weight of the binder composition.

4. Binder composition according to one of the preceding claims, wherein the lignite fly ash has a sulphate content of from 7.5 to 15 wt.%, based on the weight of the lignite fly ash.

5. Binder composition according to one of the preceding claims, wherein the lignite fly ash comprises silicon oxides in an amount of at most 35 wt.%, based on the weight of the lignite fly ash.

6. Binder composition according to one of the preceding claims, wherein the combined amount of the oxides of silicon, aluminum and iron present in the lignite fly ash does not exceed 50 wt.%, based on the weight of the lignite fly ash.

7. Binder composition according to one of the preceding claims, wherein the lignite fly ash comprises calcium oxide in an amount of at least 20 wt.%, preferably 30 to 50 wt.%, based on the weight of the lignite fly ash.

8. Binder composition according to one of the preceding claims, wherein the lignite fly ash comprises free lime, preferably in an amount of at least 2.5 wt.%, more preferably 4 to 10 wt.%, based on the weight of the lignite fly ash.

9. Binder composition according to one of the preceding claims, wherein the alkaline earth activator is selected from the group consisting of calcium oxide, calcium hydroxide, magnesium oxide, magnesium hydroxide and mixtures thereof, preferably from calcium oxide or calcium hydroxide and a mixture thereof.

10. Binder composition according to one of the preceding claims, further comprising Portland cement, preferably present in an amount of from 5 to 30 wt.%, more preferably of from 10 to 20 wt.%, based on the total weight of the binder composition.

11. Binder composition according to one of the preceding claims, wherein the lignite fly ash has been ground prior to its addition to the binder composition, or wherein the lignite fly ash has been slaked prior to its addition to the binder composition.

12. Binder composition according to one of the preceding claims, further comprising one or more additives selected from the group consisting of dyes, plasticizers, stabilizers, waterproofing agents, frost proofing agents, dust proofing agents, air entrainment agents, set accelerating agents and preservatives.

13. Method for manufacturing concrete, mortar or grout, comprising allowing a mixture of an aggregate material suitable for manufacturing concrete, mortar or grout, a binder composition according to one of the preceding claims 1 to 12 and water to set.

14. Concrete, mortar or grout obtainable by the method of claim 13, wherein a mixture of an aggregate material suitable for manufacturing concrete, mortar or grout, a binder composition according to one of the preceding claims 1 to 12 and water has been allowed to set.

15. Use of a binder composition according to one of the preceding claims 1 to 12 as a binding agent in the manufacture of a concrete floor.

## Patentansprüche

1. Bindemittelzusammensetzung für Beton, Mörtel oder Einpressmörtel, umfassend Braunkohlenflugasche und einen zweiten Bestandteil, ausgewählt aus der Gruppe, bestehend aus vermahlener granulierter Hochofenschlacke (GGBS), einem Erdalkali-Aktivator, ausgewählt aus Calciumoxid, Calciumhydroxid, Magnesiumoxid, Magnesiumhydroxid und Gemischen davon, einer Flugasche der Klasse F, einer Flugasche der Klasse C, Calciumcarbonat, Magnesiumcarbonat und Gemischen davon, wobei die Braunkohlenflugasche einen Sulfatgehalt von mindestens 6 Gew.-%, bezogen auf das Gewicht der Braunkohlenflugasche, aufweist, und wobei die Bindemittelzusammensetzung 10 bis 90 Gew.-% der Braunkohlenflugasche und 90 bis 10 Gew.-% des zweiten Bestandteils, bezogen auf das Gesamtgewicht der Bindemittelzusammensetzung, umfasst.

2. Bindemittelzusammensetzung nach Anspruch 1, wobei der zweite Bestandteil GGBS ist und wobei die Zusammensetzung von 10 bis 90 Gew.-% der Braunkohlenflugasche und von 90 bis 10 Gew.-% der GGBS, bezogen auf das Gesamtgewicht der Bindemittelzusammensetzung, umfasst.

3. Bindemittelzusammensetzung nach Anspruch 2, wobei die Zusammensetzung von 30 bis 70 Gew.-%, vorzugsweise 40 bis 60 Gew.-% der Braunkohlenflugasche und von 70 bis 30 Gew.-%, vorzugsweise 60 bis 40 Gew.-% der GGBS, bezogen auf das Gesamtgewicht der Bindemittelzusammensetzung, umfasst.

4. Bindemittelzusammensetzung nach einem der vorstehenden Ansprüche, wobei die Braunkohlenflugasche einen Sulfatgehalt von 7,5 bis 15 Gew.-%, bezogen auf das Gewicht der Braunkohlenflugasche, aufweist.

5. Bindemittelzusammensetzung nach einem der vorstehenden Ansprüche, wobei die Braunkohlenflugasche Siliciumoxide in einer Menge von höchstens 35 Gew.-%, bezogen auf das Gewicht der Braunkohlenflugasche, umfasst.

6. Bindemittelzusammensetzung nach einem der vorstehenden Ansprüche, wobei die kombinierte Menge der in der Braunkohlenflugasche vorhandenen Oxide von Silicium, Aluminium und Eisen 50 Gew.-%, bezogen auf das Gewicht der Braunkohlenflugasche, nicht übersteigt.

7. Bindemittelzusammensetzung nach einem der vorstehenden Ansprüche, wobei die Braunkohlenflugasche Calciumoxid in einer Menge von mindestens 20 Gew.-%, vorzugsweise 30 bis 50 Gew.-%, bezogen auf das Gewicht der Braunkohlenflugasche, umfasst.

8. Bindemittelzusammensetzung nach einem der vorstehenden Ansprüche, wobei die Braunkohlenflugasche freien Kalk, vorzugsweise in einer Menge von mindestens 2,5 Gew.-%, bevorzugter 4 bis 10 Gew.-%, bezogen auf das Gewicht der Braunkohlenflugasche, umfasst.

9. Bindemittelzusammensetzung nach einem der vorstehenden Ansprüche, wobei der Erdalkali-Aktivator ausgewählt ist aus der Gruppe, bestehend aus Calciumoxid, Calciumhydroxid, Magnesiumoxid, Magnesiumhydroxid und Gemischen davon, vorzugsweise aus Calciumoxid oder Calciumhydroxid und einem Gemisch davon.

10. Bindemittelzusammensetzung nach einem der vorstehenden Ansprüche, weiter umfassend Portlandzement, der vorzugsweise in einer Menge von 5 bis 30 Gew.-%, bevorzugter von 10 bis 20 Gew.-%, bezogen auf das Gesamtgewicht der Bindemittelzusammensetzung, vorliegt.

11. Bindemittelzusammensetzung nach einem der vorstehenden Ansprüche, wobei die Braunkohlenflugasche vor ihrer Zugabe zur Bindemittelzusammensetzung vermahlen worden ist, oder wobei die Braunkohlenflugasche vor ihrer Zugabe zur Bindemittelzusammensetzung gelöscht worden ist.

12. Bindemittelzusammensetzung nach einem der vorstehenden Ansprüche, weiter umfassend ein oder mehrere Additive, ausgewählt aus der Gruppe, bestehend aus Farbstoffen, Weichmachern, Stabilisatoren, Wasserabdichtungsmitteln, Frostschutzmitteln, Staubschutzmitteln, Luftporenbildnern, Abbindebeschleunigern und Konservierungsmitteln.

13. Verfahren zur Herstellung von Beton, Mörtel oder Einpressmörtel, umfassend das Abbinden lassen eines Gemisches aus einem zur Herstellung von Beton, Mörtel oder Einpressmörtel geeigneten Zuschlagstoffmaterial, einer Bindemittelzusammensetzung nach einem der vorstehenden Ansprüche 1 bis 12 und Wasser.

14. Beton, Mörtel oder Einpressmörtel, erhältlich durch das Verfahren nach Anspruch 13, wobei ein Gemisch aus einem zur Herstellung von Beton, Mörtel oder Einpressmörtel geeigneten Zuschlagstoffmaterial, einer Bindemittelzusammensetzung nach einem der vorstehenden Ansprüche 1 bis 12 und Wasser abgebunden ist.

15. Verwendung einer Bindemittelzusammensetzung nach einem der vorstehenden Ansprüche 1 bis 12 als Bindemittel bei der Herstellung eines Betonfußbodens.

## Revendications

1. Composition de liant pour béton, mortier ou coulis comprenant des cendres volantes de lignite et un second ingrédient choisi dans le groupe constitué par un laitier de haut fourneau granulé broyé (GGBS), un activateur alcalino-terreux choisi parmi l'oxyde de calcium, l'hydroxyde de calcium, l'oxyde de magnésium, l'hydroxyde de magnésium et des mélanges ceux-ci, une cendre volante de classe F, une cendre volante de classe C, le carbonate de calcium, le carbonate de magnésium et des mélanges de ceux-ci, dans laquelle les cendres volantes de lignite ont une teneur en sulfate d'au moins 6% en poids, par rapport au poids des cendres volantes de lignite, et dans laquelle la composition de liant comprend de 10 % à 90% en poids de la cendre volante de lignite et de 90% à 10% en poids du second ingrédient, par rapport au poids total de la composition de liant.

2. Composition de liant selon la revendication 1, dans laquelle le second ingrédient est un GGBS et dans laquelle la composition comprend de 10% à 90% en poids des cendres volantes de lignite et de 90% à 10% en poids de GGBS, par rapport au poids total de la composition de liant.

3. Composition de liant selon la revendication 2, dans laquelle la composition comprend de 30% à 70% en poids, préférablement de 40% à 60% en poids des cendres volantes de lignite et de 70% à 30% en poids, préférablement de 60% à 40% en poids de GGBS, par rapport au poids total de la composition de liant.

4. Composition de liant selon l'une des revendications précédentes, dans laquelle les cendres volantes de lignite ont une teneur en sulfate allant de 7,5% à 15% en poids, par rapport au poids des cendres volantes de lignite.

5. Composition de liant selon l'une des revendications précédentes, dans laquelle les cendres volantes de lignite comprennent des oxydes de silicium en une quantité d'au plus 35% en poids, par rapport au poids des cendres volantes de lignite.

6. Composition de liant selon l'une des revendications précédentes, dans laquelle la quantité combinée des oxydes de silicium, d'aluminium et de fer présents dans les cendres volantes de lignite ne dépasse pas 50% en poids, par rapport au poids des cendres volantes de lignite.

7. Composition de liant selon l'une des revendications précédentes, dans laquelle les cendres volantes de lignite comprennent de l'oxyde de calcium en une quantité d'au moins 20% en poids, de préférence de 30% à 50% en poids, par rapport au poids des cendres volantes de lignite.

8. Composition de liant selon l'une des revendications précédentes, dans laquelle les cendres volantes de lignite comprennent de la chaux libre, préférablement en une quantité d'au moins 2,5% en poids, plus préférablement de 4% à 10% en poids, par rapport au poids des cendres volantes de lignite.

9. Composition de liant selon l'une des revendications précédentes, dans laquelle l'activateur alcalino-terreux est choisi dans le groupe constitué par l'oxyde de calcium, l'hydroxyde de calcium, l'oxyde de magnésium, l'hydroxyde de magnésium et des mélanges de ceux-ci, préférablement parmi l'oxyde de calcium ou l'hydroxyde de calcium et un mélange de ceux-ci.

10. Composition de liant selon l'une des revendications précédentes, comprenant en outre du ciment Portland, préférablement présent en une quantité allant de 5% à 30% en poids, plus préférablement de 10 à 20% en poids, par rapport au poids total de la composition de liant.

11. Composition de liant selon l'une des revendications précédentes, dans laquelle les cendres volantes de lignite ont été broyées avant leur ajout à la composition de liant, ou dans laquelle les cendres volantes de lignite ont été éteintes avant leur ajout à la composition de liant.

12. Composition de liant selon l'une des revendications précédentes, comprenant en outre un ou plusieurs additifs choisis dans le groupe constitué par les colorants, les plastifiants, les stabilisants, les agents imperméabilisants, les agents antigel, les agents anti-poussière, les agents d'entraînement d'air, les agents accélérateurs de prise et les conservateurs.

13. Procédé de fabrication de béton, mortier ou coulis, comprenant le fait de permettre à un mélange d'un matériau d'agrégat approprié pour fabriquer du béton, du mortier ou du coulis, d'une composition de liant selon l'une des revendications 1 à 12 précédentes et d'eau de prendre.

14. Béton, mortier ou coulis pouvant être obtenu par le procédé de la revendication 13, dans lequel un mélange d'un matériau d'agrégat approprié pour fabriquer du béton, mortier ou coulis, une composition de liant selon l'une quelconque des revendications précédentes 1 à 12 et de l'eau a été laissée prendre.

15. Utilisation d'une composition de liant selon l'une des revendications 1 à 12 précédentes comme agent liant dans la fabrication d'un sol en béton.
